# EUROPEAN PATENT APPLICATION

(11) **EP 4 057 392 A1**
(43) Date of publication of application: **14.09.2022**
(21) Application number: 20892425.8
(22) Date of filing: 23.11.2020
(51) Int. Cl.: H01M 4/587, H01M 4/133, H01M 4/1393

(54) **NEGATIVE ELECTRODE MATERIAL AND PREPARATION METHOD THEREFOR, BATTERY, AND TERMINAL**

(30) Priority: 25.11.2019 CN 201911171298
(71) Applicant: Huawei Technologies Co., Ltd., Shenzhen, Guangdong 518129 (CN)
(72) Inventor: LI, Zhengjie, Shenzhen, Guangdong 518129 (CN); GE, Chuanzhang, Shanghai 201209 (CN); ZHOU, Wei, Shenzhen, Guangdong 518129 (CN); XIA, Shengan, Shenzhen, Guangdong 518129 (CN); WANG, Pinghua, Shenzhen, Guangdong 518129 (CN)
(74) Representative: Gill Jennings & Every LLP
(86) International application number: PCT/CN2020/130864
(87) International publication number: WO 2021/104201

(57) **Abstract**

Embodiments of the present invention provide a negative electrode material, including a doped carbon material. The doped carbon material includes a carbon-based matrix and doping elements doped in the carbon-based matrix. The doping elements include at least two of B, N, O, P, S, and F. At least a part of the doping elements form C-Ma-Mb chemical bonds with the carbon-based matrix. Ma and Mb represent two different types of doping elements. The negative electrode material includes the doped carbon material, and the doping elements in the doped carbon material form the C-Ma-Mb chemical bonds with the carbon-based matrix. Therefore, the negative electrode material has excellent fast charging performance. Embodiments of the present invention further provide a production method of the negative electrode material, a battery including the negative electrode material, and a terminal.

## Description

This application claims priority to Chinese Patent Application No. 201911171298.1, filed with China National Intellectual Property Administration on November 25, 2019 and entitled "NEGATIVE ELECTRODE MATERIAL, PRODUCTION METHOD THEREOF, BATTERY, AND TERMINAL", which is incorporated herein by reference in its entirety.

### TECHNICAL FIELD

Embodiments of the present invention relate to the field of lithium-ion battery technologies, and in particular, to a negative electrode material, a production method thereof, a battery, and a terminal.

### BACKGROUND

With development of the Internet and popularity of portable electronic devices, people increasingly depend on smart mobile electronic devices, and a life problem of a battery becomes increasingly prominent. A most common idea is to lengthen a life of the battery by increasing a capacity of the battery, and a fast charging technology is a more proper solution to the life problem. For fast charging, currently, a main solution in the industry is to improve a fast charging capability of the battery by using a circuit design. With the circuit design, the fast charging capability is improved to some extent. For example, fast charging in which the battery is charged to 80% of capacity in 30 minutes is implemented. However, to implement faster charging, or even fast charging at a minute level, a charging current is larger. In this case, a higher requirement is imposed on fast charging performance of a negative electrode material of the battery. However, currently, for either a conventional graphite negative electrode material or a novel high-capacity silicon-based negative electrode material, due to a limitation caused by an intrinsic structure of the material, when the charging current is excessively large, active ions (such as lithium ions) diffuse slowly, and dendrites are very easily formed. Consequently, cell swelling and cycle attenuation are caused, and even fire and explosion are caused in a serious case. Therefore, to implement faster charging, a novel fast charging negative electrode material needs to be developed when an energy density is not lost.

### SUMMARY

In view of this, embodiments of the present invention provide a negative electrode material, where the negative electrode material includes a doped carbon material, and a part of doping elements in the doped carbon material form C-Ma-Mb chemical bonds with a carbon-based matrix, so that fast charging performance of the negative electrode material is effectively improved, and a problem of poor fast charging performance of an existing negative electrode material is resolved to some extent.

Specifically, a first aspect of embodiments of the present invention provides a negative electrode material, including a doped carbon material, where the doped carbon material includes a carbon-based matrix and doping elements doped in the carbon-based matrix, the doping elements include at least two of B, N, O, P, S, and F, at least a part of the doping elements form C-Ma-Mb chemical bonds with the carbon-based matrix, and Ma and Mb represent two different types of doping elements.

In an implementation of the present invention, the carbon-based matrix includes one or more of artificial graphite, natural graphite, hard carbon, soft carbon, mesocarbon microbeads, carbon nanotubes, graphene, carbon fibers, active carbon, porous carbon, acetylene black, and Ketjen black.

In an implementation of the present invention, a mass content of the doping elements in the doped carbon material is less than or equal to 5%. Specifically, the mass content of the doping elements ranges from 0.1% to 5%.

In an implementation of the present invention, a median particle diameter of the doped carbon material ranges from 1 nm to 30 µm.

In an implementation of the present invention, the negative electrode material includes primary particles or secondary particles of the doped carbon material. A median particle diameter of the primary particle of the doped carbon material may range from 1 µm to 10 µm, and a median particle diameter of the secondary particle of the doped carbon material may range from 3 µm to 30 µm.

In an implementation of the present invention, the negative electrode material further includes a protective layer disposed on a surface of the primary particle or the secondary particle of the doped carbon material, and the protective layer includes a carbon layer and/or a conductive polymer layer.

In another implementation of the present invention, the negative electrode material further includes other negative electrode active components, and the doped carbon material is composited with the other negative electrode active components to form composite particles.

In an implementation of the present invention, the other negative electrode active components include one or more of a carbon-based material, a silicon-based material, a tin-based material, a germanium-based material, a metal compound, and a metal alloy.

In a specific implementation of the present invention, the doped carbon material and the other negative electrode active components are evenly distributed in the composite particles.

In an implementation of the present invention, the negative electrode material further includes a protective layer disposed on a surface of the composite particle, and the protective layer includes a carbon layer and/or a conductive polymer layer.

In another specific implementation of the present invention, the composite particle includes a core that includes the other negative electrode active components, and a coating layer disposed on a surface of the core, and the coating layer includes the doped carbon material.

In an implementation of the present invention, a thickness of the coating layer ranges from 1 nm to 100 nm.

In an implementation of the present invention, a mass ratio of the coating layer to the core ranges from 0.1:100 to 5:100.

The negative electrode material provided in the first aspect of embodiments of the present invention includes the doped carbon material, and at least a part of the doping elements in the doped carbon material form the C-Ma-Mb chemical bonds with the carbon-based matrix. Because the C-Ma-Mb chemical bonds are formed, a distance between carbon layers is increased, so that a transport path of active ions is broadened, resistance of diffusion and transport of the ions between the layers is reduced, and fast charging performance of the material is improved. In addition, because Ma-Mb and C atoms form bonds, a quantity of vacancy defects on a carbon lattice is reduced, and a graphitization-like degree of the material is improved, so that conducting performance and initial coulombic efficiency of the material are improved. Furthermore, because the doping elements Ma and Mb are introduced, a quantity of binding and storage sites of the active ions is increased, and a specific capacity of the negative electrode material is improved.

According to a second aspect, an embodiment of the present invention further provides a production method of a negative electrode material, including:
mixing a carbon source precursor and a doping element source, and enabling the carbon source precursor and the doping element source to react at 100°C to 180°C, to obtain a modified carbon source precursor; and
performing low-temperature pre-carbonization processing on the obtained modified carbon source precursor in a protective atmosphere at 500 °C to 800 °C, and then performing high-temperature carbonization processing on the obtained modified carbon source precursor at 900 °C to 1150°C, to obtain a doped carbon material after cooling, where the doped carbon material includes a carbon-based matrix and doping elements doped in the carbon-based matrix, the doping elements include at least two of B, N, O, P, S, and F, at least a part of the doping elements form C-Ma-Mb chemical bonds with the carbon-based matrix, and Ma and Mb represent two different types of doping elements.

In an implementation of the present invention, the foregoing production method further includes: mixing, granulating, sintering, and crushing the doped carbon material and other negative electrode active components, to obtain composite particles formed after the doped carbon material is composited with the other negative electrode active components, where the doped carbon material and the other negative electrode active components are evenly distributed in the composite particles.

In an implementation of the present invention, the foregoing production method further includes: mixing, sintering in an inert atmosphere, and crushing the doped carbon material and the other negative electrode active components, to obtain composite particles formed after the doped carbon material is composited with the other negative electrode active components, where the composite particle includes a core that includes the other negative electrode active components, and a coating layer coating a surface of the core, and the coating layer includes the doped carbon material.

In an implementation of the present invention, the doping element source includes at least two types of elements of B, N, O, P, S, and F.

In this implementation of the present invention, the doping element source is selected from one or more of phosphoric acid, lithium phosphate, nitric acid, citric acid, performic acid, phosphorus pentoxide, ethylenediamine, ammonium dihydrogen phosphate, diammonium phosphate, urea, ammonia water, hydrogen peroxide, melamine, boric acid, boron trioxide, boron nitride, sulfonated polystyrene, thioacetamide, ammonium persulfate, thiourea, sodium sulfate, lithium fluoride, pyrrole, pyridine, thiophene, imidazole, silicon tetrafluoride, aluminum fluoride, calcium fluoride, phosphazene, pentafluorocyclotriphosphazene, ethoxy (pentafluoro) cyclotriphosphazene, hexachlorocyclotriphosphazene, hexadecyl trimethyl ammonium bromide, dimethyl sulfone, L-cysteine, and ammonia hydrogen fluoride.

In an implementation of the present invention, the method for mixing a carbon source precursor and a doping element source includes one or more of a physical ball milling method, a low-temperature melting method, a mechanical fusion method, a high-temperature sintering method, an epitaxial growth method, a vapor deposition method, a magnetron sputtering method, a sol-gel method, a microwave reaction method, a hydrothermal method, and a solvothermal method.

In an implementation of the present invention, the specific operation of mixing a carbon source precursor and a doping element source, and enabling the carbon source precursor and the doping element source to react at 100 °C to 180°C is as follows:
dispersing the carbon source precursor and the doping element source in water, and enabling the carbon source precursor and the doping element source to react at 100 °C to 180°C for 4 to 18 hours.

The production method provided in the second aspect of embodiments of the present invention has a simple process, is easy to control, and is suitable for industrial production.

A third aspect of embodiments of the present invention provides a battery, including a positive electrode plate, a negative electrode plate, a separator, and an electrolyte. The negative electrode plate includes a negative electrode active material, and the negative electrode active material includes the negative electrode material according to the first aspect of the present invention.

In an implementation of the present invention, the battery includes a lithium-ion battery, a sodium-ion battery, a potassium-ion battery, a magnesium-ion battery, a zinc-ion battery, a lithium-sulfur battery, an aluminum-ion battery, or a lithium-air battery.

The battery provided in this embodiment of the present invention has good fast charging performance, so that a life problem of an existing battery is resolved to some extent.

An embodiment of the present invention further provides a terminal, including a terminal housing, and a circuit board and a battery that are located inside the terminal housing, where the battery is electrically connected to the circuit board to supply power to the circuit board, and the battery includes the battery according to the third aspect of embodiments of the present invention.

### BRIEF DESCRIPTION OF DRAWINGS

FIG. 1 is a schematic diagram of a structure of a lithium-ion battery according to an embodiment of the present invention;
FIG. 2 is a schematic diagram of a structure of a doped carbon material 10 according to an embodiment of the present invention;
FIG. 3 is a schematic diagram of forming C-Ma-Mb chemical bonds by doping elements and a carbon-based matrix according to an embodiment of the present invention;
FIG. 4A and FIG. 4B are respectively schematic working diagrams of an existing undoped carbon material and a doped carbon material according to an embodiment of the present invention during charging;
FIG. 5 is a schematic diagram of a structure of a terminal according to an embodiment of the present invention;
FIG. 6 is a cross-sectional SEM (Scanning Electron Microscope, scanning electron microscope) view of a graphite negative electrode material doped with both P and O according to Embodiment 1 of the present invention;
FIG. 7 is a diagram of distribution of P elements of a graphite negative electrode material doped with both P and O in EDS (Energy Dispersive X-Ray Spectroscopy, energy dispersive X-ray spectroscopy) according to Embodiment 1 of the present invention; and
FIG. 8 is an XPS (X-ray Photoelectron Spectroscopy, X-ray photoelectron spectroscopy) view of a graphite negative electrode material doped with both P and O according to Embodiment 1 of the present invention.

### DESCRIPTION OF EMBODIMENTS

The following describes embodiments of the present invention with reference to the accompanying drawings in embodiments of the present invention.

Embodiments of the present invention provide a negative electrode material, and the negative electrode material may be used to manufacture a negative electrode of a rechargeable battery. The rechargeable battery may be a lithium-ion battery, a sodium-ion battery, a potassium-ion battery, a magnesium-ion battery, a zinc-ion battery, a lithium-sulfur battery, an aluminum-ion battery, a lithium-air battery, or the like.

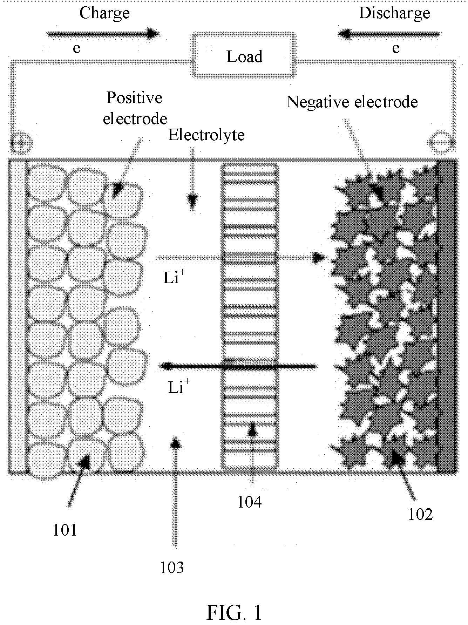

As shown in FIG. 1, core components of a lithium-ion battery include a positive electrode material 101, a negative electrode material 102, an electrolyte 103, a separator 104, and a corresponding connection accessory and loop. The positive electrode material 101 and the negative electrode material 102 may be used to extract/insert lithium ions to store and release energy. The electrolyte acts as a carrier for transporting the lithium ions between a positive electrode and a negative electrode. The separator 104 may allow the lithium ions to pass through, but is not conductive, so that the positive electrode and the negative electrode are separated to avoid a short circuit. A charging and discharging mechanism of a rechargeable battery is as follows: During charging, active ions (Li⁺, Na⁺, K⁺, Mg²⁺, Zn²⁺, Al³⁺, and the like) are extracted from a lattice of the positive electrode material, and enter a lattice of the negative electrode material after passing through the electrolyte. During discharging, the active ions are extracted from the negative electrode material, and enter the lattice of the positive electrode material after passing through the electrolyte. When a charging current is excessively large, due to a small distance between layers, a graphite-based electrode material or a silicon-carbon electrode material has a limited capability to receive the active ions, and the active ions may finally form dendrites. Consequently, a battery capacity and cycle performance are attenuated, and a safety risk may be caused in a serious case. Especially, when the active ions are lithium ions or sodium ions, a current electrode material is far from meeting an application scenario in which charging is performed by using a large current. Therefore, an electrode material that has super-fast charging capability needs to be developed.

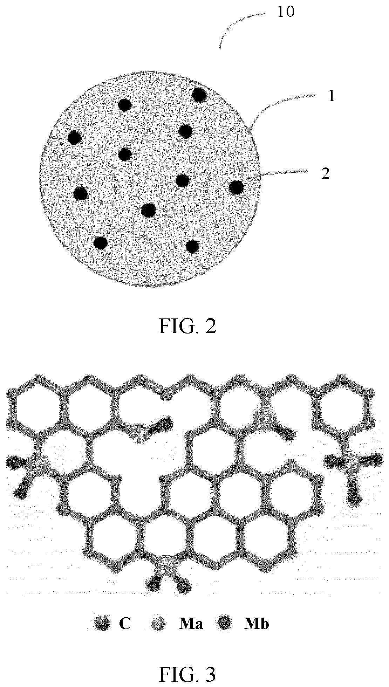

As shown in FIG. 2, a negative electrode material provided in an embodiment of the present invention includes a doped carbon material 10. The doped carbon material 10 includes a carbon-based matrix 1 and doping elements 2 doped in the carbon-based matrix 1. The doping elements 2 include at least two of B, N, O, P, S, and F. At least a part of the doping elements 2 form C-Ma-Mb chemical bonds with the carbon-based matrix 1. Ma and Mb represent two different types of doping elements 2.

In an implementation of the present invention, the C-Ma-Mb chemical bond indicates that Ma forms a chemical bond with C, and Ma forms a chemical bond with Mb. A specific bonding manner and a specific configuration are not limited. Single-bond bonding, double-bond bonding, or three-bond bonding may exist. In other words, C-Ma-Mb only indicates that C, Ma, and Mb have a bonding relationship. FIG. 3 is a schematic diagram of forming C-Ma-Mb chemical bonds by doping elements and a carbon-based matrix. In C-Ma-Mb, Ma and Mb may be any two different elements that are of B, N, O, P, S, and F, and that may form a chemical bond. For example, C-Ma-Mb may be specifically C-P-O, C-O-P, C-N-F, C-P-N, C-S-O, C-S-P, C-N-O, C-N-B, C-N-P, C-N-S, C-B-O, C-N-O, and the like. The doped carbon material 10 in this embodiment of the present invention may include one or more types of C-Ma-Mb chemical bonds. For example, in an implementation of the present invention, two types of chemical bonds C-P-O and C-P-N may be included. In another implementation of the present invention, two types of chemical bonds C-P-O and C-N-B may be included. In another implementation of the present invention, two types of chemical bonds C-P-O and C-P-S may be included, or two types of chemical bonds C-P-O and C-S-O may be included. Certainly, in another implementation of the present invention, other two types of C-Ma-Mb chemical bonds may be included, or three, four, or more types of C-Ma-Mb chemical bonds may be included.

It should be noted that, in an implementation of the present invention, the doping elements 2 doped in the carbon-based matrix 1 do not necessarily all form the C-Ma-Mb chemical bonds, and some doping elements may form C-Ma or C-Mb chemical bonds with the carbon-based matrix. In an implementation of the present invention, optionally, a proportion of a mass of doping elements, forming the C-Ma-Mb chemical bonds, to a total mass of the doping elements is greater than 50%. Specifically, the proportion of the mass of the doping elements, forming the C-Ma-Mb chemical bonds, to the total mass of the doping elements may be 60%, 70%, 80%, 90%, or greater than 90%.

In an implementation of the present invention, the carbon-based matrix 1 may be one or more of artificial graphite, natural graphite, hard carbon, soft carbon, mesocarbon microbeads, carbon nanotubes, graphene, carbon fibers, active carbon, porous carbon, acetylene black, and Ketjen black.

In an implementation of the present invention, based on different electronegativity of the doping elements (boron B 2.04, phosphorus P 2.19, carbon C 2.55, sulfur S 2.58, nitrogen N 3.04, oxygen O 3.44, and fluorine F 3.98), the doping elements have different capabilities to attract electrons in a compound. When a difference between electronegativity of different doping elements is less than 2.0, covalent bonds are formed between atoms in corresponding doping elements, to obtain stable bonds of C-Ma-Mb (for example, C-P-O, C-O-P, C-N-F, C-P-N, C-S-O, C-S-P, C-N-O, C-N-B, C-N-P, C-N-S, C-B-O, or C-N-O). Bonding between Ma and carbon atoms protects unstable active oxidation sites on a surface of a carbon lattice, so that integrity of the carbon lattice and chemical stability of the surface of the carbon lattice are improved. In addition, doping atoms that have a large radius in the carbon lattice and C-Ma-Mb jointly broaden a distance between carbon layers, and C-Ma-Mb repairs defects on the carbon lattice, so that a graphitization-like degree is improved, and a microcrystalline structure of the carbon material is optimized. In addition, because doping elements whose electronegativity is greater than 2.55 exist in C-Ma-Mb, wettability of solvated active ions to the carbon lattice may be improved, to facilitate fast transport of the ions in an interface. Therefore, existence of C-Ma-Mb optimizes a chemical property of the surface of the carbon lattice and the microcrystalline structure of carbon, so that electrochemical performance is significantly improved.

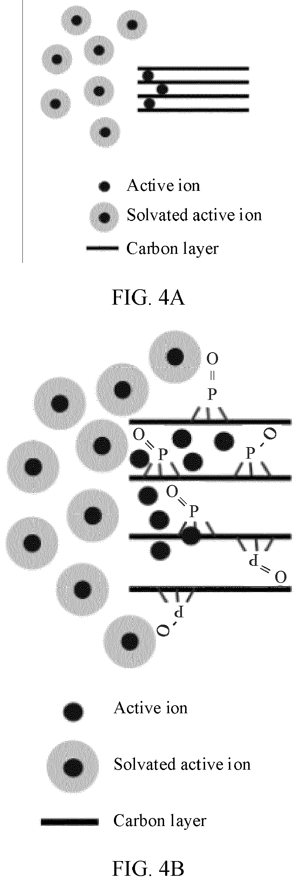

It should be noted that, in this embodiment of the present invention, the C-Ma-Mb chemical bond only indicates that Ma forms a chemical bond with C, and Ma forms a chemical bond with Mb, but a specific configuration is not limited. A C-P-O chemical bond is used as an example, and the C-P-O chemical bond may specifically include three types of configurations: C₃-P=O, C₂-P=O(-O), and C-P-O. The C₃-P=O configuration has highest stability, and is a main configuration existing in the carbon lattice. The C-P-O configuration is a metastable configuration, and has a second-highest content. A trigonal pyramidal configuration such as the C₃-P=O configuration is conducive to broadening the distance between the layers, and may repair vacancy defects to improve the graphitization-like degree, so as to optimize a carbon-based microcrystalline structure, facilitate fast transport of the ions in the interface, and finally significantly improve electrochemical performance. FIG. 4A and FIG. 4B are respectively schematic working diagrams of an existing undoped carbon material and a doped carbon material according to an embodiment of the present invention during. As shown in the figures, in the doped carbon material provided in this embodiment of the present invention, existence of C₃-P=O broadens the distance between the carbon layers, and facilitates transport of the ions. The C₃-P=O configuration may play a positive role in improving surface wettability, rate performance, a reversible fast charging/discharging capability, a specific capacitance, and the like of the material. Certainly, when phosphorus and oxygen are doped in the carbon-based matrix, unstable configurations C₃-P and C-O-P may further exist in the carbon lattice, but have a small content.

In an implementation of the present invention, a mass content of the doping elements in the doped carbon material 10 is less than or equal to 5%. In an implementation of the present invention, the mass content of the doping elements ranges from 0.1% to 5%. In another implementation of the present invention, the mass content of the doping elements ranges from 2% to 4%. When a doping amount is greater than 5%, initial coulombic efficiency of the negative electrode material is greatly affected. When elements with a proper amount are doped, fast charging performance of the carbon-based matrix can be improved without greatly affecting initial coulombic efficiency.

In an implementation of the present invention, a median particle diameter of the doped carbon material ranges from 1 nm to 30 µm. Specifically, a doped carbon material that has a suitable particle diameter size may be selected based on a specific application manner. The doped carbon material may be primary particles or secondary particles. A median particle diameter of the primary particle of the doped carbon material may range from 1 µm to 10 µm, and a median particle diameter of the secondary particle of the doped carbon material may range from 3 µm to 30 µm.

An existence form of the doped carbon material included in the negative electrode material provided in this embodiment of the present invention is not limited. In some embodiments of the present invention, the doped carbon material may be directly used as the negative electrode material to produce a negative electrode. In some other embodiments of the present invention, the doped carbon material may be composited with other negative electrode active components to form composite particles, and then a negative electrode is produced. A specific manner in which the doped carbon material is composited with the other negative electrode active components to form the composite particles may be as follows: The doped carbon material and the other negative electrode active components are evenly mixed and then granulated to obtain the composite particles; or the other negative electrode active components may be used as a core, and the doped carbon material may be used as a housing to coat a surface of the core. Certainly, simple physical mixing may be performed on the doped carbon material in this embodiment of the present invention and the other negative electrode active materials to produce a negative electrode.

In an implementation of the present invention, the negative electrode material includes the primary particles or the secondary particles of the doped carbon material. In other words, the doped carbon material is directly used as the negative electrode material to produce a negative electrode. In this implementation, to improve performance of the negative electrode material, the negative electrode material may further include a protective layer disposed on a surface of the primary particle or the secondary particle of the doped carbon material, and the protective layer may be a carbon layer and/or a conductive polymer layer. In some embodiments, a material of the carbon layer may be specifically soft carbon, hard carbon, amorphous carbon, carbon nanotubes, and graphene that are obtained by decomposing a carbon source, and a compound including one or more thereof. A conductive polymer of the conductive polymer layer may be but not limited to one or more of polyacetylene, polypyrrole, polythiophene, poly (3,4-ethylenedioxythiophene)/poly(styrenesulfonate), polyaniline, polyphenylene, and poly(phenylenevinylene). A thickness of the protective layer may range from 5 nm to 50 nm, and further, may range from 10 nm to 20 nm. The protective layer can avoid excessive surface side effects caused because an electrolyte is in direct contact with the doped carbon material, to reduce an irreversible capacity and a loss of active ions in a battery, and may further increase an electronic conducting capability of the material, and improve fast charging performance of the material.

In another implementation of the present invention, the negative electrode material further includes other negative electrode active components, and the doped carbon material is composited with the other negative electrode active components to form composite particles. The doped carbon material and the other negative electrode active components are evenly distributed in the composite particles. A mass ratio of the other negative electrode active materials to the doped carbon material may be selected based on an actual case.

In an implementation of the present invention, in the composite particles formed by the doped carbon material and the other negative electrode active components, a median particle diameter of the doped carbon material ranges from 1 nm to 30 µm. In a specific implementation, the median particle diameter of the doped carbon material in the composite particles ranges from 50 nm to 10 µm. Further, the median particle diameter of the doped carbon material may range from 100 nm to 8 µm.

In a specific implementation of the present invention, in the composite particles, the doped carbon material may be composited with the other negative electrode active components by using asphalt as a connection medium, and the asphalt is sintered to form carbon. In other words, the composite particles further include a carbon material that connects the doped carbon material and the other negative electrode active components.

In some implementations of the present invention, the negative electrode material may further include a protective layer disposed on a surface of the composite particle, and the protective layer may be a carbon layer and/or a conductive polymer layer. The protective layer is as previously described, and details are not described herein again.

In another implementation of the present invention, the negative electrode material further includes other negative electrode active components, and the doped carbon material is composited with the other negative electrode active components to form composite particles. The composite particle includes a core that includes the other negative electrode active components, and a coating layer disposed on a surface of the core. The coating layer includes the doped carbon material. A thickness of the coating layer may range from 1 nm to 100 nm. Further, the thickness of the coating layer may range from 10 nm to 100 nm, 20 nm to 80 nm, or 50 nm to 70 nm. A mass ratio of the coating layer to the core may range from 0.1:100 to 5:100. In some embodiments of the present invention, the mass ratio of the coating layer to the core may range from 1:100 to 4:100. In some other embodiments, the mass ratio of the cladding layer to the core may range from 2:100 to 3:100. A suitable amount of coating may improve fast charging performance of the material and alleviate a side reaction between the material and the electrolyte without affecting a capacity and initial coulombic efficiency of the material. In an implementation of the present invention, the coating layer may include only the doped carbon material, or may include both the doped carbon material and a conductive polymer. The conductive polymer may be but not limited to one or more of polyacetylene, polypyrrole, polythiophene, poly (3,4-ethylenedioxythiophene)/poly(styrenesulfonate), polyaniline, polyphenylene, and poly(phenylenevinylene). In some implementations of the present invention, the doped carbon material as a material of the coating layer may have a median particle diameter ranging from 1 nm to 50 nm. A doped carbon material that has a small particle diameter is selected to produce the coating layer, so that the thickness and surface morphology of the coating layer can be better controlled, and a specific surface area of the material can be reduced.

The other negative electrode active components mentioned in this embodiment of the present invention may be one or more of a carbon-based material, a silicon-based material, a tin-based material, a germanium-based material, a metal compound, and a metal alloy. Specifically, the carbon-based material may be one or more of artificial graphite (AG), natural graphite (NG), hard carbon (HC), soft carbon, mesocarbon microbeads (CMCB), carbon nanotubes (CNT), graphene, carbon fibers, active carbon, porous carbon, acetylene black (AB), and Ketjen black. The silicon-based material may be one or more of silicon (including nano-silicon, micron-silicon, and the like), silicon oxide, silicon monoxide (SiOx, where 0.3<x<1.7), a silicon-carbon composite (Si/C), porous silicon, and thin-film silicon. The tin-based material may be one or more of metallic tin (Sn), tin carbon (Sn/C), porous tin, and thin-film tin. The germanium-based material may be one or more of metallic germanium (Ge), germanium carbon (Ge/C), porous germanium, and thin-film germanium. The metal compound may be one or more of nickel oxide, iron oxide, cobalt oxide, manganese oxide, zinc oxide, copper oxide, tin oxide, germanium oxide, molybdenum oxide, molybdenum sulfide, iron sulfide, and lithium titanate. The metal alloy may be one or more of lithium metal, lithiumaluminum alloy, lithium-tin alloy, lithium-silicon alloy, lithium-germanium alloy, and lithium-carbon alloy.

The negative electrode material in this embodiment of the present invention includes the doped carbon material, and the doping elements in the doped carbon material form the C-Ma-Mb chemical bonds with the carbon-based matrix. Therefore, the negative electrode material has the following beneficial effects: (1) In C-Ma-Mb, because Ma and C atoms form bonds, a quantity of vacancy defects on the carbon lattice is reduced, and the graphitization-like degree of the material is improved, so that conducting performance and initial coulombic efficiency of the material are improved. (2) C-Ma-Mb exists in the carbon lattice or an edge, so that the distance between the carbon layers is increased, a transport path of active ions is broadened, resistance of diffusion and transport of the ions between the layers is reduced, and fast charging performance of the material is improved. (3) Because the doping elements whose electronegativity is greater than 2.55 exist in C-Ma-Mb, surface wettability of the material may be improved, so that the ions are transported more smoothly, interface impedance and diffusion impedance are greatly reduced, a stable working voltage window of an electrode is improved, and fast charging performance of the material is improved. (4) Because Ma and Mb in C-Ma-Mb are introduced, a quantity of binding and storage sites of the active ions is increased, and a specific capacity of the negative electrode material is improved.

Correspondingly, an embodiment of the present invention further provides a production method of a negative electrode material, including:
Step (1): Mix a carbon source precursor and a doping element source, and enable the carbon source precursor and the doping element source to react at 100°C to 180°C, to obtain a modified carbon source precursor.
Step (2): Perform low-temperature pre-carbonization processing on the obtained modified carbon source precursor in a protective atmosphere at 500 °C to 800 °C, and then perform high-temperature carbonization processing on the obtained modified carbon source precursor at 900 °C to 1150°C, to obtain a doped carbon material after cooling, where the doped carbon material includes a carbon-based matrix and doping elements doped in the carbon-based matrix, the doping elements include at least two of B, N, O, P, S, and F, at least a part of the doping elements form C-Ma-Mb chemical bonds with the carbon-based matrix, and Ma and Mb represent two different types of doping elements.

In an implementation of the present invention, in step (1), the carbon source precursor may be a material in which a mass content of carbon elements ranges from 80% to 99%, a mass content of hydrogen elements ranges from 1% to 15%, and a mass content of oxygen elements ranges from 0% to 5%. A softening point of the carbon source precursor is less than 200°C. A median particle diameter D50 of the carbon source precursor may range from 2 µm to 15 µm, and a maximum particle diameter Dmax thereof is less than 70 µm. Specifically, the carbon source precursor may be selected from at least one of graphite and coal tar pitch, petroleum asphalt, or modified Courmarone resin whose softening point is greater than 200°C.

In step (1), the doping element source includes at least two types of elements of B, N, O, P, S, and F. The doping element source may be a substance, and the substance includes at least two types of elements of B, N, O, P, S, and F. Alternatively, two or more substances may be combined to include at least two types of elements of B, N, O, P, S, and F. Specifically, the doping element source may be selected from one or more of phosphoric acid, lithium phosphate, nitric acid, citric acid, performic acid, phosphorus pentoxide, ethylenediamine, ammonium dihydrogen phosphate, diammonium phosphate, urea, ammonia water, hydrogen peroxide, melamine, boric acid, boron trioxide, boron nitride, sulfonated polystyrene, thioacetamide, ammonium persulfate, thiourea, sodium sulfate, lithium fluoride, pyrrole, pyridine, thiophene, imidazole, silicon tetrafluoride, aluminum fluoride, calcium fluoride, phosphazene, pentafluorocyclotriphosphazene, ethoxy (pentafluoro) cyclotriphosphazene, hexachlorocyclotriphosphazene, hexadecyl trimethyl ammonium bromide, dimethyl sulfone, L-cysteine, and ammonia hydrogen fluoride. Amass ratio of the doping element source to the carbon source precursor may range from 5:100 to 30:100.

In step (1), the method for mixing a carbon source precursor and a doping element source includes one or more of a physical ball milling method, a low-temperature melting method, a mechanical fusion method, a high-temperature sintering method, an epitaxial growth method, a vapor deposition method, a magnetron sputtering method, a sol-gel method, a microwave reaction method, a hydrothermal method, and a solvothermal method. In a specific embodiment of the present invention, deionized water may be used as a solvent to stir and mix the carbon source precursor and the doping element source at a high speed, and a mass ratio of the carbon source precursor to the deionized water ranges from 30:100 to 60:100.

In step (1), the specific operation of mixing a carbon source precursor and a doping element source, and enabling the carbon source precursor and the doping element source to react at 100°C to 180°C is as follows:
dispersing the carbon source precursor and the doping element source in water, and performing a dehydration reaction on the carbon source precursor and the doping element source at 100°C to 180°C for 4 to 18 hours. In this step, doping elements are deposited on a surface of the carbon source precursor, and are diffused into the carbon source as the reaction proceeds, to form bonds with carbon atoms.

In an implementation of the present invention, in step (2), a temperature for low-temperature pre-carbonization may be specifically 500°C, 600°C, 700°C, or 800°C, time for low-temperature pre-carbonization may range from 1 hour to 3 hours, and a content of volatile components of a product obtained after low-temperature pre-carbonization may be controlled between 3% and 8%. A temperature for high-temperature carbonization may range from 900 °C to 1150°C. Specifically, the temperature for high-temperature carbonization may be 900 °C, 950 °C, 1000°C, 1100°C, or 1150°C. Time for high-temperature carbonization may range from 2 hours to 10 hours. High-temperature carbonization processing is performed under a vacuum of 1 Pa to 1000 Pa. Specifically, a vacuum carbonization furnace may be used. Low-temperature pre-carbonization may remove most volatile components. Performing high-temperature carbonization processing under the vacuum helps an unstable configuration that is in a carbon lattice and that includes doping elements evolve into a stable configuration. A configuration that includes phosphorus is used as an example. In a process of high-temperature carbonization processing, unstable C₃-P and CO-P configurations are transformed into more stable C₃-P=O configurations and a small portion of metastable C-P-O configurations. The C₃-P=O configurations enable the carbon lattice to become more ordered and complete, and increase a distance between layers. Optimization of the phosphorus configuration enables a chemical property of a surface of the carbon-based matrix to be more stable, and also effectively improves electrochemical performance of the material.

In step (2), after high-temperature carbonization processing and cooling, a mesh net may be used based on an actual case. For example, a standard mesh net that has more than 80 meshes may be used. The modified carbon source precursor may be cooled to 0°C to 80°C.

In step (2), a median particle diameter D50 of the doped carbon material ranges from 1 nm to 30 µm, a maximum particle diameter Dmax thereof is less than 90 µm, and a content of the doping elements is below 5%. The doped carbon material that is produced in step (2) and that has a large particle diameter may be pulverized to a material that has a target particle diameter. A specific pulverization method may be but not limited to airflow pulverization classification and mechanical pulverization classification.

In some embodiments of the present invention, the foregoing production method may further include: mixing, sintering in an inert atmosphere, and crushing the doped carbon material and other negative electrode active components, to obtain composite particles formed after the doped carbon material is composited with the other negative electrode active components. The composite particle includes a core that includes the other negative electrode active components, and a coating layer coating a surface of the core. The coating layer includes the doped carbon material. A doped carbon material whose median particle diameter ranges from 1 nm to 50 nm may be selected to be mixed with the other negative electrode active components.

In an implementation of the present invention, the method for mixing the doped carbon material and other negative electrode active components may be a physical ball milling method, a low-temperature melting method, a mechanical fusion method, a high-temperature sintering method, an epitaxial growth method, a vapor deposition method, a magnetron sputtering method, a sol-gel method, a microwave reaction method, a hydrothermal method, and a solvothermal method. In a specific embodiment of the present invention, a step of using the mechanical fusion method is as follows: The doped carbon material and the other negative electrode active components that serve as the core are placed into a fusion machine to be stirred and mixed at a high speed. A stirring speed is 10 revolutions per minute to 2000 revolutions per minute, and stirring time is 0.1 hour to 12 hours.

In some other embodiments of the present invention, the foregoing production method may further include: mixing, granulating, sintering, and crushing the doped carbon material and other negative electrode active components, to obtain composite particles formed after the doped carbon material is composited with the other negative electrode active components. The doped carbon material and the other negative electrode active components are evenly distributed in the composite particles. In some implementations of the present invention, a doped carbon material whose median particle diameter ranges from 50 nm to 10 µm may be selected to be mixed with the other negative electrode active components. In an implementation of the present invention, in a granulating process, a small amount of asphalt may be added as a connection medium. In a sintering process, the asphalt is carbonized into carbon, and the asphalt plays a role of bonding and granulation.

In an implementation of the present invention, the method for mixing the doped carbon material and other negative electrode active components may be a physical ball milling method, a low-temperature melting method, a mechanical fusion method, a high-temperature sintering method, an epitaxial growth method, a vapor deposition method, a magnetron sputtering method, a sol-gel method, a microwave reaction method, a hydrothermal method, and a solvothermal method. In a specific embodiment of the present invention, a step of using the low-temperature melting method is as follows: The doped carbon material and the other negative electrode active component are placed into a high-speed mixer to be stirred and mixed. A stirring speed is 10 revolutions per minute to 1000 revolutions per minute, and stirring time is 0.1 hour to 12 hours.

In an implementation of the present invention, for granulation processing, asphalt may be added into a high-speed mixer, and temperature programming is performed for granulation. A temperature rise speed may be 1°C per minute to 10°C per minute. A temperature may be 150°C to 500°C. A softening point of the asphalt is 50°C to 200°C. A median particle diameter D50 of the asphalt is 2 µm to 15 µm, and a maximum particle diameter Dmax thereof is less than 70 µm.

In an implementation of the present invention, for sintering processing in the foregoing production method, a carbonization furnace may be used, a temperature may be 300°C to 800°C, and sintering time may be 2 hours to 10 hours.

In an implementation of the present invention, airflow pulverization classification and/or mechanical pulverization classification may be used to perform crushing processing in the foregoing production method.

In an implementation of the present invention, the protective atmosphere and the inert atmosphere in the foregoing production method may be specifically at least one of nitrogen, helium, and argon.

An embodiment of the present invention further provides a battery, including a positive electrode plate, a negative electrode plate, a separator, and an electrolyte. The negative electrode plate includes a negative electrode active material, and the negative electrode active material includes the foregoing negative electrode material provided in embodiments of the present invention. The battery may be a lithium-ion battery, a sodium-ion battery, a potassium-ion battery, a magnesium-ion battery, a zinc-ion battery, a lithium-sulfur battery, an aluminum-ion battery, or a lithium-air battery. The foregoing battery may be used in a terminal consumer product, such as a mobile phone, a tablet computer, a portable computer, a notebook computer, and another wearable or movable electronic device.

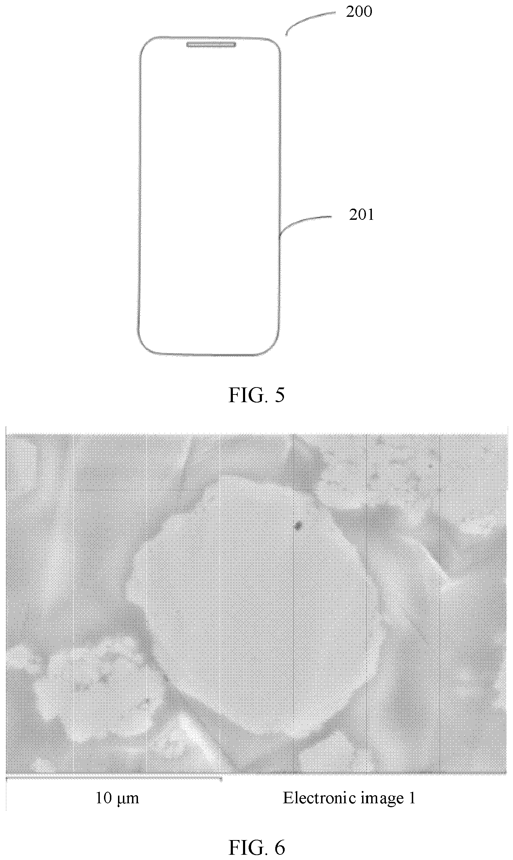

As shown in FIG. 5, an embodiment of the present invention further provides a terminal 200. The terminal 200 may be a mobile phone, or may be an electronic product such as a tablet computer, a notebook computer, a portable computer, and a smart wearable product. The terminal 200 includes a housing 201 assembled on an outer side of the terminal, and a circuit board and a battery (not shown in the figure) that are located inside the housing 201. The battery and the circuit board are electrically connected to supply power to the circuit board. The battery is the battery provided in the foregoing embodiments of the present invention. The housing 201 may include a front housing assembled on a front side of the terminal and a rear cover assembled on a rear side. The battery may be fastened to an inner side of the rear cover.

Embodiments of the present invention are further described below by using a plurality of embodiments.

### Embodiment 1

A production method of a negative electrode material includes the following steps:
Graphite AG powder whose median particle diameter D50 is 5 µm, hydrogen peroxide, phosphoric acid, and ammonium persulfate are mixed and dispersed in water based on a mass ratio of 10:1:2:1, to produce slurry whose solid content is 45%, and a dehydration reaction is performed on the slurry at 150°C for 8 hours. Then, a temperature of the slurry rises to 550°C at a speed of 3 °C/min under protection of nitrogen, and low-temperature pre-carbonization processing is performed on the slurry for 2 hours. After being cooled to a room temperature, the slurry is transferred to a vacuum furnace, and a vacuum degree is adjusted to be within 10 Pa. Next, the temperature of the slurry rises to 1050°C at a speed of 2°C/min, and high-temperature carbonization processing is performed on the slurry for 4 hours. After being cooled to the room temperature, the slurry passes through a standard mesh net that has 300 meshes, to obtain a graphite negative electrode material doped with both P and O. In the negative electrode material, the P and O elements form C-P-O chemical bonds with a graphite matrix.

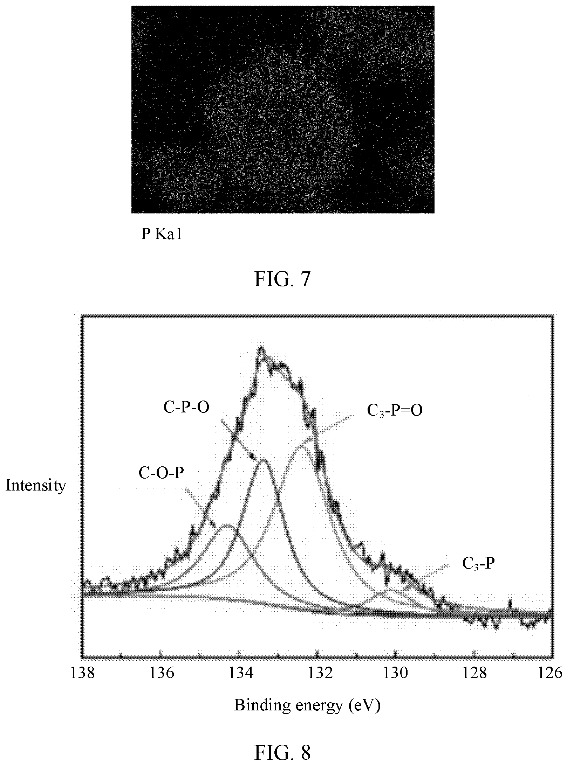

FIG. 6 is a cross-sectional SEM view of a graphite negative electrode material that is doped with both P and O and that is produced in Embodiment 1 of the present invention. As shown in the figure, a cross-sectional structure of the material is flat, and there is no hole inside the material. FIG. 7 is a diagram of distribution of P elements of a graphite negative electrode material that is doped with both P and O and that is produced in Embodiment 1 of the present invention. It may be learned from the figure that the P elements are evenly doped in the graphite negative electrode material. FIG. 8 is a diagram of distribution of phosphorus configurations of a graphite negative electrode material that is doped with both P and O and that is produced in Embodiment 1 of the present invention. As shown in FIG. 8, in the negative electrode material, C₃-P=O configurations are most widely distributed, C-P-O configurations are second widely distributed, and C-O-P configurations and C₃-P configurations are few.

### Embodiment 2

A production method of a negative electrode material includes the following steps:
Petroleum asphalt whose softening point is 280 °C is produced, by using an airflow pulverization classifier, into asphalt powder whose median particle diameter D50 is 5 µm.The obtained asphalt powder, ammonium persulfate, phosphoric acid, and phosphazene are mixed and dispersed in water based on a mass ratio of 10:1:2:1, to produce slurry whose solid content is 50%, and a dehydration reaction is performed on the slurry at 180°C for 4 hours. Then, a temperature of the slurry rises to 600°C at a speed of 3°C/min under protection of nitrogen, and low-temperature pre-carbonization processing is performed on the slurry for 1 hour. After being cooled to a room temperature, the slurry is transferred to a vacuum furnace, and a vacuum degree is adjusted to be within 10 Pa. Next, the temperature of the slurry rises to 1000°C at a speed of 2°C/min, and high-temperature carbonization processing is performed on the slurry for 6 hours. After being cooled to the room temperature, the slurry passes through a standard mesh net that has 300 meshes, to obtain a hard-carbon negative electrode material doped with P, O, and N. In the negative electrode material, the P, O, and N elements form C-P-O and C-P-N chemical bonds with a hard-carbon matrix.

### Embodiment 3

A production method of a negative electrode material includes the following steps:
(1) Coal tar pitch whose softening point is 250 °C is produced, by using an airflow pulverization classifier, into powder whose median particle diameter D50 is 5 µ m. The obtained pitch powder, hydrogen peroxide, performic acid, and phosphoric acid are mixed and dispersed in water based on a mass ratio of 10:1:1:2, to produce slurry whose solid content is 45%, and a dehydration reaction is performed on the slurry at 180°C for 4 hours. Then, a temperature of the slurry rises to 600°C at a speed of 3°C/min under protection of nitrogen, and low-temperature pre-carbonization processing is performed on the slurry for 1 hour. After being cooled to a room temperature, the slurry is transferred to a vacuum furnace, and a vacuum degree is adjusted to be within 10 Pa. Next, the temperature of the slurry rises to 1000°C at a speed of 2°C/min, and high-temperature carbonization processing is performed on the slurry for 6 hours. After being cooled to the room temperature, the slurry passes through a standard mesh net that has 300 meshes, to obtain a hard-carbon material doped with both P and O. The P and O elements form C-P-O chemical bonds with a carbon matrix.
(2) The hard-carbon material that is doped with both P and O and that is obtained in step (1) is pulverized by using an airflow pulverization method, so that D50 is 1 µm. Then, the hard-carbon material and a silicon carbon/graphite composite material SiC/AG (a capacity per gram is 500 mAh/g) are placed into a fusion machine to be stirred and mixed at a high speed. A stirring speed is 1000 revolutions per minute, and stirring time is 1 hour.
(3) A product obtained in step (2) is placed into a carbonization furnace for sintering processing. A sintering temperature is 800°C, sintering time is 3 hours, and a sintering atmosphere is nitrogen.
(4) A sintering product in step (3) is pulverized by using a mechanical pulverization method, so that D50 is 12 µm, to obtain a silicon carbon/graphite negative electrode material that has a doped carbon material coating layer. The negative electrode material includes a silicon carbon/graphite core, and a hard-carbon material that is doped with both P and O and that coats a surface of the core.

### Embodiment 4

A production method of a negative electrode material includes the following steps:
(1) Coal tar pitch whose softening point is 280 °C is produced, by using an airflow pulverization classifier, into powder whose median particle diameter D50 is 5 µm. The obtained pitch powder, ammonium persulfate, ethoxy (pentafluoro) cyclotriphosphazene, and hexadecyl trimethyl ammonium bromide are mixed and dispersed in water based on a mass ratio of 10:1:2:1, to produce slurry whose solid content is 55%, and a dehydration reaction is performed on the slurry at 150°C for 8 hours. Then, a temperature of the slurry rises to 550°C at speed of 3°C/min under protection of nitrogen, and low-temperature pre-carbonization processing is performed on the slurry for 2 hours. After being cooled to a room temperature, the slurry is transferred to a vacuum furnace, and a vacuum degree is adjusted to be within 10 Pa. Next, the temperature of the slurry rises to 1050°C at speed of 2°C/min, and high-temperature carbonization processing is performed on the slurry for 4 hours. After being cooled to the room temperature, the slurry passes through a standard mesh net that has 300 meshes, to obtain a hard-carbon material doped with both P and O. The P and O elements form C-P-O chemical bonds with a carbon matrix;
(2) The hard-carbon material that is doped with both P and O and that is obtained in step (1) is pulverized by using an airflow pulverization method, so that D50 is 0.5 µm. Then the hard-carbon material and a silicon oxide/graphite composite material SiO/AG (a capacity per gram is 500 mAh/g) are placed into a fusion machine to be stirred and mixed at a high speed. A stirring speed is 2000 revolutions per minute, and stirring time is 0.5 hour.
(3) A product obtained in step (2) is placed into a carbonization furnace for sintering processing. A sintering temperature is 600°C, sintering time is 3 hours, and a sintering atmosphere is nitrogen.
(4) A sintering product obtained in step (3) is pulverized by using a mechanical pulverization method, so that D50 is 15 µm, to obtain a silicon oxide/graphite negative electrode material that has a doped carbon material coating layer. The negative electrode material includes a silicon oxide/graphite core, and a hard-carbon material that is doped with both P and O and that coats a surface of the core.

### Embodiment 5

A production method of a negative electrode material includes the following steps:
(1) Graphite AG powder whose median particle diameter D50 is 8 µm, ammonium persulfate, phosphoric acid, and melamine are mixed and dispersed in water based on a mass ratio of 10:1:2:1, to produce slurry whose solid content is 55%, and a dehydration reaction is performed on the slurry at 180°C for 4 hours. Then, a temperature of the slurry rises to 650 °C at a speed of 3 °C/min under protection of nitrogen, and low-temperature pre-carbonization processing is performed on the slurry for 1 hour. After being cooled to a room temperature, the slurry is transferred to a vacuum furnace, and a vacuum degree is adjusted to be within 10 Pa. Next, the temperature of the slurry rises to 1050°C at a speed of 2°C/min, and high-temperature carbonization processing is performed on the slurry for 4 hours. After being cooled to the room temperature, the slurry passes through a standard mesh net that has 300 meshes, to obtain a graphite material doped with both P and O. The P and O elements form C-P-O chemical bonds with a graphite matrix.
(2) The graphite material obtained in step (1) and nano-silicon (a particle diameter is 100 nm) are placed into a high-speed mixer for mixing. A stirring speed is 1000 revolutions per minute, and stirring time is 1 hour.
(3) Asphalt whose softening point is 200°C and median particle diameter D50 is 3 µm is added into the mixture obtained in step (2), and temperature programming is performed for granulation. A temperature rise speed is 3°C per minute, and a temperature rises to 500°C.
(4) A product obtained in step (3) is placed into a carbonization furnace for sintering processing. A sintering temperature is 800°C, sintering time is 3 hours, and a sintering atmosphere is nitrogen.
(5) A sintering product in step (4) is pulverized by using a mechanical pulverization method, so that D50 is 12 µm, to obtain a graphite composite negative electrode material doped with nano-silicon/both P and O.

### Comparative example 1

Graphite AG powder is dispersed in water to produce slurry whose solid content is 45%, and a graphite negative electrode material in Comparative example 1 is produced based on a method the same as the method in Embodiment 1.

### Comparative example 2

Petroleum asphalt whose softening point is 280 °C is produced, by using an airflow pulverization classifier, into powder whose median particle diameter D50 is 5 µm. The obtained powder is dispersed in water to produce slurry whose solid content is 50%, and a hard-carbon negative electrode material in Comparative example 2 is produced based on a method the same as the method in Embodiment 2.

### Comparative example 3

Coal tar pitch whose softening point is 250°C is produced, by using an airflow pulverization classifier, into powder whose median particle diameter D50 is 5 µm. The obtained powder is dispersed in water to produce slurry whose solid content is 45%, and a silicon carbon/graphite negative electrode material having a coating layer in Comparative example 3 is produced based on a method the same as the method in Embodiment 3.

### Comparative example 4

Coal tar pitch whose softening point is 280°C is produced, by using an airflow pulverization classifier, into powder whose median particle diameter D50 is 5 µm. The obtained powder is dispersed in water to produce slurry whose solid content is 55%, and a silicon oxide/graphite negative electrode material having a coating layer in Comparative example 4 is produced based on a method the same as the method in Embodiment 4.

### Comparative example 5

Graphite AG powder whose median particle diameter D50 is 8 µm is dispersed in water to produce slurry whose solid content is 55%, and a nano-silicon/graphite composite negative electrode material in Comparative example 5 is produced based on a method the same as the method in Embodiment 5.

To strongly support beneficial effects brought by technical solutions of embodiments of the present invention, a half-cell test method is used to respectively perform a first charging and discharging performance test and a rate test on a lithium-ion battery and a sodium-ion battery in which the negative electrode materials in Embodiments 1 to 5 of the present invention and Comparative examples 1 to 5 of the present invention are used. Results are listed in Table 1 and Table 2. The half-cell test method is as follows: A polyvinylidene fluoride solution whose mass fraction is 6% to 7% is produced by using N-methylpyrrolidone as a solvent. The negative electrode material, polyvinylidene fluoride, and conductive carbon black are evenly mixed based on a mass ratio of 80:10:10, and are coated on copper foil. A coated electrode plate is placed into a vacuum drying oven with a temperature of 90 °C for vacuum drying for 4 hours, and then rolled to a plate with a surface density of 4 mg/cm² for later use. Next, a 2032-type button cell is assembled in a glove box filled with argon. An electrochemical performance test is performed on the assembled half-cell in an electrochemical detection system by using a three-component mixed solvent of 1 mol/L LiPF₆ (a lithium-ion battery) or 1 mol/L NaPF₆ (a sodium-ion battery) as an electrolyte based on EC:DMC:EMC=1:1:1 (a volume ratio), and by using a lithium metal plate (the lithium-ion battery) or a sodium metal plate (the sodium-ion battery) as a counter electrode. A charging and discharging voltage ranges from 5 mV to 3.0 V A lithium-extraction capacity at 0.1C and corresponding initial coulombic efficiency are tested, and fast charging performance at 1C, 2C, and 3C is tested.

**Table 1 Performance test results of lithium-ion batteries in which different negative electrode materials are used**

| No. | 0.1C lithium-extraction specific capacity mAh/g | Initial coulombic efficiency (%) | 1C/0.1C capacity retention rate % | 2C/0.1C capacity retention rate % | 3C/0.1C capacity retention rate % |
|---|---|---|---|---|---|
| Embodiment 1 | 352 | 92 | 90 | 85 | 75 |
| Embodiment 2 | 555 | 84 | 95 | 92 | 85 |
| Embodiment 3 | 510 | 91 | 92 | 88 | 80 |
| Embodiment 4 | 505 | 90 | 88 | 82 | 70 |
| Embodiment 5 | 1200 | 86 | 86 | 80 | 65 |
| Comparative example 1 | 350 | 90 | 50 | 15 | 8 |
| Comparative example 2 | 450 | 72 | 70 | 50 | 20 |
| Comparative example 3 | 499 | 90 | 45 | 12 | 5 |
| Comparative example 4 | 495 | 89 | 43 | 12 | 6 |
| Comparative example 5 | 1100 | 82 | 40 | 8 | 5 |

**Table 2 Performance test results of sodium-ion batteries in which different negative electrode materials are used**

| No. | 0.1C sodiumextraction specific capacity mAh/g | Initial coulombic efficiency (%) | 1C/0.1C capacity retention rate % | 2C/0.1C capacity retention rate % | 3C/0.1C capacity retention rate % |
|---|---|---|---|---|---|
| Embodiment 2 | 350 | 85 | 95 | 90 | 80 |
| Comparative example 2 | 250 | 70 | 85 | 80 | 70 |

The above test results indicate that, compared with Comparative examples 1 to 5, in embodiments of the present invention, a battery in which a negative electrode material including a doped carbon material is used has high initial coulombic efficiency and good fast charging performance. A reason is that the negative electrode material in embodiments of the present invention includes the doped carbon material, and the doped carbon material includes at least two types of doping elements. The at least two types of doping elements form C-Ma-Mb chemical bonds with a carbon-based matrix, and formation of the C-Ma-Mb chemical bonds has the following beneficial effects: (1) In C-Ma-Mb, because Ma and C atoms form bonds, a quantity of vacancy defects on a carbon lattice is reduced, and a graphitization-like degree of the material is improved, so that conducting performance and initial coulombic efficiency of the material are improved. (2) C-Ma-Mb exists in the carbon lattice or an edge, and due to a large radius of a doping atom, a distance between carbon layers is increased, a transport path of active ions is broadened, resistance of diffusion and transport of the ions between the layers is reduced, and fast charging performance of the material is improved. (3) Because the doping elements whose electronegativity is greater than 2.55 exist in C-Ma-Mb, surface wettability of the material is greatly improved, so that the ions are transported more smoothly, interface impedance and diffusion impedance are greatly reduced, and fast charging performance of the material is improved. (4) Because Ma and Mb in C-Ma-Mb are introduced, a quantity of binding and storage sites of the active ions is increased, and a specific capacity of the material is improved.

However, the negative electrode material in Comparative examples 1 to 5 is an undoped carbon material. A specified quantity of defect sites exist on a carbon lattice, a distance between carbon microcrystalline layers is small, and an electrolyte has poor wettability. As a result, a large quantity of active ions are consumed in the first charging process, and low coulombic efficiency and poor rate performance are exhibited. This is not conducive to fast charging.

## Claims

1. A negative electrode material, comprising a doped carbon material, wherein the doped carbon material comprises a carbon-based matrix and doping elements doped in the carbon-based matrix, the doping elements comprise at least two of B, N, O, P, S, and F, at least a part of the doping elements form C-Ma-Mb chemical bonds with the carbon-based matrix, and Ma and Mb represent two different types of doping elements.

2. The negative electrode material according to claim 1, wherein the carbon-based matrix comprises one or more of artificial graphite, natural graphite, hard carbon, soft carbon, mesocarbon microbeads, carbon nanotubes, graphene, carbon fibers, active carbon, porous carbon, acetylene black, and Ketjen black.

3. The negative electrode material according to claim 1, wherein a mass content of the doping elements in the doped carbon material is less than or equal to 5%.

4. The negative electrode material according to claim 1, wherein a median particle diameter of the doped carbon material ranges from 1 nm to 30 µm.

5. The negative electrode material according to claim 1, wherein the negative electrode material is composed of primary particles or secondary particles of the doped carbon material.

6. The negative electrode material according to claim 5, wherein a median particle diameter of the primary particle of the doped carbon material ranges from 1 µm to 10 µm, and a median particle diameter of the secondary particle of the doped carbon material ranges from 3 µm to 30 µm.

7. The negative electrode material according to claim 5, wherein the negative electrode material further comprises a protective layer disposed on a surface of the primary particle or the secondary particle of the doped carbon material, and the protective layer comprises a carbon layer and/or a conductive polymer layer.

8. The negative electrode material according to claim 1, wherein the negative electrode material further comprisesw, and the doped carbon material is composited with the other negative electrode active components to form composite particles.

9. The negative electrode material according to claim 8, wherein the other negative electrode active components comprise one or more of a carbon-based material, a silicon-based material, a tin-based material, a germanium-based material, a metal compound, and a metal alloy.

10. The negative electrode material according to claim 8, wherein the doped carbon material and the other negative electrode active components are evenly distributed in the composite particles.

11. The negative electrode material according to claim 10, wherein the negative electrode material further comprises a protective layer disposed on a surface of the composite particle, and the protective layer comprises a carbon layer and/or a conductive polymer layer.

12. The negative electrode material according to claim 8, wherein the composite particle comprises a core that is composed of the other negative electrode active components, and a coating layer disposed on a surface of the core, and the coating layer comprises the doped carbon material.

13. The negative electrode material according to claim 12, wherein a thickness of the coating layer ranges from 1 nm to 100 nm.

14. The negative electrode material according to claim 12, wherein a mass ratio of the coating layer to the core ranges from 0.1:100 to 5:100.

15. A production method of a negative electrode material, comprising:
mixing a carbon source precursor and a doping element source, and enabling the carbon source precursor and the doping element source to react at 100°C to 180°C, to obtain a modified carbon source precursor; and
performing low-temperature pre-carbonization processing on the obtained modified carbon source precursor in a protective atmosphere at 500 °C to 800 °C, and then performing high-temperature carbonization processing on the obtained modified carbon source precursor at 900°C to 1150°C, to obtain a doped carbon material after cooling, wherein the doped carbon material comprises a carbon-based matrix and doping elements doped in the carbon-based matrix, the doping elements comprise at least two of B, N, O, P, S, and F, at least a part of the doping elements form C-Ma-Mb chemical bonds with the carbon-based matrix, and Ma and Mb represent two different types of doping elements.

16. The production method according to claim 15, further comprising: mixing, granulating, sintering, and crushing the doped carbon material and other negative electrode active components, to obtain composite particles formed after the doped carbon material is composited with the other negative electrode active components, wherein the doped carbon material and the other negative electrode active components are evenly distributed in the composite particles.

17. The production method according to claim 15, further comprising: mixing, sintering in an inert atmosphere, and crushing the doped carbon material and other negative electrode active components, to obtain composite particles formed after the doped carbon material is composited with the other negative electrode active components, wherein the composite particle comprises a core that is composed of the other negative electrode active components, and a coating layer coating a surface of the core, and the coating layer comprises the doped carbon material.

18. The production method according to claim 15, wherein the doping element source comprises at least two types of elements of B, N, O, P, S, and F.

19. The production method according to claim 18, wherein the doping element source is selected from one or more of phosphoric acid, lithium phosphate, nitric acid, citric acid, performic acid, phosphorus pentoxide, ethylenediamine, ammonium dihydrogen phosphate, diammonium phosphate, urea, ammonia water, hydrogen peroxide, melamine, boric acid, boron trioxide, boron nitride, sulfonated polystyrene, thioacetamide, ammonium persulfate, thiourea, sodium sulfate, lithium fluoride, pyrrole, pyridine, thiophene, imidazole, silicon tetrafluoride, aluminum fluoride, calcium fluoride, phosphazene, pentafluorocyclotriphosphazene, ethoxy (pentafluoro) cyclotriphosphazene, hexachlorocyclotriphosphazene, hexadecyl trimethyl ammonium bromide, dimethyl sulfone, L-cysteine, and ammonia hydrogen fluoride.

20. The production method according to claim 15, wherein the method for mixing a carbon source precursor and a doping element source comprises one or more of a physical ball milling method, a low-temperature melting method, a mechanical fusion method, a high-temperature sintering method, an epitaxial growth method, a vapor deposition method, a magnetron sputtering method, a sol-gel method, a microwave reaction method, a hydrothermal method, and a solvothermal method.

21. The production method according to claim 15, wherein the specific operation of mixing a carbon source precursor and a doping element source, and enabling the carbon source precursor and the doping element source to react at 100°C to 180°C is as follows:
dispersing the carbon source precursor and the doping element source in water, and enabling the carbon source precursor and the doping element source to react at 100°C to 180°C for 4 to 18 hours.

22. A battery, comprising a positive electrode plate, a negative electrode plate, a separator, and an electrolyte, wherein the negative electrode plate comprises a negative electrode active material, and the negative electrode active material comprises the negative electrode material according to any one of claims 1 to 14.

23. The battery according to claim 22, wherein the battery comprises a lithium-ion battery, a sodium-ion battery, a potassium-ion battery, a magnesium-ion battery, a zinc-ion battery, a lithium-sulfur battery, an aluminum-ion battery, or a lithium-air battery.

24. A terminal, comprising a terminal housing, and a circuit board and a battery that are located inside the terminal housing, wherein the battery is electrically connected to the circuit board to supply power to the circuit board, and the battery comprises the battery according to either of claims 22 and 23.
